# EUROPÄISCHE PATENTANMELDUNG

(11) **EP 3 766 771 A1**
(43) Veröffentlichungstag der Anmeldung: **20.01.2021**
(21) Anmeldenummer: 20178412.1
(22) Anmeldetag: 05.06.2020
(51) Int. Cl.: B62K 19/30, B62K 19/34, B62M 6/55

(54) **VERBINDUNGSSYSTEM EINER ANTRIEBSEINHEIT MIT EINEM FAHRRADRAHMEN**

(30) Priorität: 19.07.2019 DE 102019210705
(71) Anmelder: Continental Bicycle Systems GmbH & Co. KG, 65760 Eschborn (DE)
(72) Erfinder: Wurmbäck, Christian - c/o Continental AG, 30419 Hannover (DE)
(74) Vertreter: Finger, Karsten

(57) **Zusammenfassung**

Verbindungssystem zur drehfesten Verbindung einer Antriebseinheit eines Fahrrads mit einem Fahrradrahmen, wobei die Antriebseinheit eine Antriebswelle aufweist und die Antriebswelle zum Antrieb eines Laufrades mit letzterem so verbunden ist, dass das Drehmoment der Antriebswelle auf das Laufrad des Fahrrades übertragen wird, wobei der Fahrradrahmen und die Antriebseinheit komplementär zueinander ausgebildete, ineinander greifende Profile aufweisen, die durch eine relativ zueinander erfolgende Verschiebung lagefest miteinander verriegelbar sind, wobei Antriebseinheit oder Fahrradrahmen mindestens eine die Verschiebung in einer vorgesehenen Endstellung begrenzende Einrichtung aufweisen und wobei ein mit Antriebseinheit und Fahrradrahmen zusammenwirkendes Verbindungsmittel zur Fixierung der verriegelten Position von Antriebseinheit von Fahrradrahmen in der Endstellung vorgesehen ist.

## Beschreibung

Die Erfindung betrifft ein Verbindungssystem, ausgebildet zur drehfesten Verbindung einer Antriebseinheit eines Fahrrads mit einem Fahrradrahmen, wobei die Antriebseinheit eine Antriebswelle aufweist und die Antriebswelle zum Antrieb eines Laufrades, im aller Regel des Hinterrades, mit letzterem so verbunden ist, dass das Drehmoment der Antriebswelle auf das Laufrad des Fahrrades übertragen wird, wobei der Fahrradrahmen und die Antriebseinheit komplementär zueinander ausgebildete, ineinander greifende Profile aufweisen. Ebenfalls betrifft die Erfindung ein Fahrrad mit einem solchen Verbindungssystem.

Als umweltfreundliche Transportmittel sind Fahrräder seit einigen Jahren auch hierzulande wieder stark gefragt und gelten insbesondere innerstädtisch als Alternative zu Fahrzeugen mit Brennstoffantrieb. Dabei hat sich eine bemerkenswerte Vielzahl an Bauweisen herausgebildet, unter denen insbesondere die so genannten Pedelecs oder E-Bikes, also pedalbetriebene Fahrzeuge mit Unterstützungsantrieb, eine herausragende Rolle spielen.

Muskel- oder pedalbetriebene Fahrzeuge mit Unterstützungsantrieb, also etwa elektrische Fahrräder mit wiederaufladbaren Energiespeichern, sind aus dem Stand der Technik in unterschiedlichen Ausführungen bekannt. Die Energiespeicher sind entweder fest mit dem Fahrzeug verbunden, so dass das Fahrzeug zu einer Ladestation gefahren werden muss und dort wieder aufgeladen werden kann, oder können vom Fahrzeug gelöst werden und separat einem Ladevorgang unterzogen werden.

Als Energiespeicher werden üblicherweise spezielle Akkumulatoren verwendet, es können aber auch handelsübliche wiederaufladbare Batterien verwendet werden, die beispielsweise in einem Gehäuse zusammengeschaltet sind.

Der für Pedelecs oder E-Bikes genutzte Hilfsantrieb ist üblicherweise ein Elektromotor, welcher als Nabenmotor im Vorderrad oder Hinterrad oder aber auch als Mittelmotor am Tretlager eines solchen Fahrrads angeordnet sein kann. Motoren am Vorderrad oder Hinterrad haben bekannte Nachteile, die im Wesentlichen darin liegen, dass die Schwerpunktslage der Motoren die Stabilität des Fahrzeugs ungünstig beeinflussen kann. Daher besitzen heute Mittelmotoren am Tretlager einen immer größeren Marktanteil.

Die Elektromotoren sind normalerweise so geschaltet, dass sie nur als Verstärker für die Pedalkraft eingesetzt werden können, wobei die Kraftunterstützung je nach Bauart des Elektrofahrrades auf bestimmte Maximalgeschwindigkeiten begrenzt ist. Der Elektromotor stellt also bei solchen Fahrzeugen lediglich eine Fahrunterstützung bereit, welche üblicherweise durch eine vom Radfahrer initiierte Pedalbetätigung angefordert werden kann. Natürlich gibt es auch Räder, bei denen der Elektroantrieb nicht nur unterstützt, sondern auch als separater bzw. alleiniger Antrieb genutzt wird.

Bei den heutigen Pedelecs oder E-Bikes zeigt ein weiterer Trend dahin, dass Fahrräder möglichst variabel auszurüsten sein sollen, dass Reparaturen möglichst einfach und schnell erfolgen sollen und dass ein Umstellen auf verschiedene Neuerungen und auch andere Motorleistungen durchaus gewünscht ist, ohne dass dazu gleich das gesamte Fahrzeug ausgetauscht werden muss. Insbesondere hat sich dabei der am Rahmen befestigte Mittelmotor als geeignetes Objekt dieser Entwicklung erwiesen. Diese Motoren sollen nicht nur leicht ausgetauscht werden können, sondern sollen auch vor Einbau in die Rahmen separat zu testen sein. Außerdem ist es manchmal gewünscht, dass die Antriebseinheit mit Motorunterstützung gegen eine ausschließlich pedalbetriebene Antriebseinheit ausgetauscht werden kann.

Eine einen Mittelmotor aufweisende Antriebseinheit wird üblicherweise an mehreren Punkten mit einem Fahrradrahmen verschraubt, nämlich in dem Bereich, in dem das Sattelrohr und das vordere Rahmenrohr in ihren unteren Bereichen zusammenlaufen, also im Bereich des Tretlagers.

Auch wenn die Fertigung der Antriebseinheiten und der zugehörigen Motorgehäuse sowie die Fertigung der Rahmen mit ihren Anschlussbereichen für den Motor bzw. das Motorgehäuse in möglichst engen Toleranzen erfolgt, so ist doch stets bei der Montage und beim Austausch der Motoren eine Anpassung und ein Ausgleich der Toleranzen erforderlich. Im Stand der Technik ist es daher üblich, Toleranzen zwischen dem Gehäuse oder den Aufnahmepunkten des Elektromotors und den Rahmen mit seinen entsprechenden Befestigungspunkten dadurch auszugleichen, dass Buchsen mit oder ohne Flansch eingesetzt werden, die den Spalt zwischen Motor und Rahmen überbrücken. Diese Buchsen sitzen entweder in Bohrungen an den Aufnahmepunkten des Motors oder in dafür vorgesehenen Bohrungen im Rahmen. Bei Fixierung durch Schrauben ziehen sich diese Buchsen an den Motor oder an den Rahmen und überbrücken die Toleranzen zwischen Rahmen und Motor. Bei entsprechend großer Ausführung können so auch unterschiedliche Positionierungen des Motors erreicht werden, etwa um eine auf die Position des im hinteren Rahmen angeordneten Laufrades ausgerichtete Ketten- oder Riemenlaufrichtung zu ermöglichen.

Im Stand der Technik sind einige Lösungen für die Anbindung zwischen Antriebseinheit und Fahrradrahmen bereits bekannt. So offenbart die DE 10 2016 112778 A1 eine Lösung, bei der die Toleranzen zwischen Rahmen und Antriebseinheit durch die oben bereits erwähnten verschiebbaren Buchsen oder durch schräge Unterlegscheiben überbrückt werden sollen. Nachteilig ist bei dieser Lösung, dass eine Vielzahl von genau angepassten Teilen zur Montage bereitgestellt werden muss.

Die DE 10 2013 224 668 A1 offenbart zur Anbindung lediglich allgemein gehaltene Hinweise auf Verbindungsmittel wie Schrauben, Schellen oder Adapter und ist daher lediglich auf das Vorhandensein einer zwischen Rahmen und Motor vorgesehenen Anbindungsmöglichkeit als solche gerichtet.

Auch die DE 10 2016 010 457 A1 offenbart in ähnlicher Weise lediglich Befestigungsplatten, die ebenfalls mit Schrauben befestigt werden können.

Für die Erfindung bestand daher die Aufgabe, durch einen Verbindungssystem eine verbesserte Befestigungsmöglichkeit einer Antriebseinheit an einem Fahrrad vorzusehen, bei dem keine zusätzlichen Einzelteile verbaut werden müssen, welches universell für Pedalantriebe und motorunterstützte Pedalantriebe eingesetzt werden kann und welches möglichst einfach montiert und ohne umfangreiche Vermessungen und Kontrollen in Betrieb gesetzt werden kann. Des Weiteren sollen die Anforderungen an Toleranzen möglichst minimiert werden ohne dass eine unangenehme Geräuschentwicklung entsteht oder es gar durch Lose in der Befestigung während des Betriebs zu Schädigungen im Verbindungsbereich kommt.

Gelöst wird diese Aufgabe durch die Merkmale des Hauptanspruchs. Weitere vorteilhafte Ausbildungen sind in den Unteransprüchen offenbart.

Dabei sind die an Fahrradrahmen und Antriebseinheit komplementär zueinander ausgebildeten und ineinander greifenden Profile durch eine relativ zueinander erfolgende Verschiebung lagefest miteinander verriegelbar, wobei Antriebseinheit oder Fahrradrahmen mindestens eine die Verschiebung in einer vorgesehenen Endstellung begrenzende Einrichtung aufweisen und wobei ein mit Antriebseinheit und Fahrradrahmen zusammenwirkendes Verbindungsmittel zur Fixierung der verriegelten Position von Antriebseinheit von Fahrradrahmen in der Endstellung vorgesehen ist.

Durch die erfindungsgemäße Ausbildung erreicht man eine definierte Führung der beiden zu verbindenden Teile Fahrradrahmen und Antriebseinheit, und zwar bis in eine Endstellung hinein, in der dann eine Fixierung erfolgen kann. Die schließlich erreichte Verriegelung verhindert dabei jegliche Relativbewegung, also jegliche Drehbewegungen oder lineare Bewegungen zwischen Antriebseinheit und Fahrradrahmen. Dadurch kann eine sehr einfache und fehlertolerante Montage ohne weitere Zusatzteile durchgeführt werden.

Eine vorteilhafte Weiterbildung besteht darin, dass die Profile als Schwalbenschwanzprofile ausgebildet sind, wobei vorzugsweise der Rahmen die Schwalbenschwanznut aufweist. Solch eine Profilierung ist relativ einfach durch abtragende Bearbeitung herzustellen und hat sich in anderem Fachgebieten bereits als besonders sichere und gut verriegelbare Verbindung erwiesen.

Während die Ausrichtung und Anordnung der komplementär zueinander ausgebildeten Profile unterschiedliche Anpassungen im Hinblick auf die Einbausituationen und die Endstellung zulässt, dies Profile also auch schräg oder geneigt ausgebildet sein können, besteht eine weitere und besonders einfache vorteilhafte Ausbildung darin, dass die Profile durch eine im Wesentlichen parallel zur Antriebswelle - und damit quer zum Rahmen - erfolgende Verschiebung miteinander verriegelbar sind. Da die Antriebswelle auch notwendigerweise parallel zu den Naben der in den Fahrradrahmen eingebauten Räder sein muss, ergibt sich dadurch für die Verschiebung eine Bezugsgröße bzw. Bezugsrichtung, die eine besonders einfache und voneinander getrennte Herstellung der komplementären Profile am Rahmen und Antriebseinheit erlaubt. Mit einer entsprechenden Normung können dann solche Bauteile mit ihren Profilen an unterschiedlichen Herstellungsorten gefertigt werden.

Eine weitere vorteilhafte Ausbildung besteht darin, dass die Antriebswelle zum Antrieb des Laufrades mit letzterem über ein Zugmittel und entsprechende Räder verbunden ist, vorzugsweise über eine Kette und Kettenräder oder über einen Zugriemen und Riemenscheiben, wobei das Zugmittel durch die relativ zueinander erfolgende Verschiebung der Profile spannbar ist. Bei einer solchen Ausbildung erfolgt die Verschiebung nicht oder nicht nur quer zum Rahmen, sondern auch in dessen Längsrichtung, so dass der Mittenabstand zwischen Antriebswelle und Radnabe am angetriebenen Laufrad durch die Befestigung der Antriebseinheit am Rahmen verändert wird.

Eine weitere vorteilhafte Ausbildung besteht darin, dass die die Verschiebung in einer vorgesehenen Endstellung begrenzende Einrichtung als mit einer Anschlagfläche an Antriebseinheit oder Fahrradrahmen zusammenwirkender Anschlag am jeweils anderen Teil ausgebildet ist. Ein solcher Anschlag kann sehr einfach z. B. als Vorsprung innerhalb des Profils, als Formgebung bei der Ausbildung des Motorgehäuses, des Tretlagergehäuses oder als Anlagefläche am Rahmen ausgebildet sein.

Eine weitere vorteilhafte Ausbildung besteht darin, dass die die Verschiebung in einer vorgesehenen Endstellung begrenzende Einrichtung durch eine selbstklemmende keilförmige Gestaltung der komplementären Profile ausgebildet ist. Eine solche selbstklemmende Linearführung ist einfach herzustellen und unterstützt gleichzeitig die erforderliche Verriegelung der Profile in jeglicher Bewegungsrichtung.

Eine weitere vorteilhafte Ausbildung besteht darin, dass die Verbindungsmittel zur Fixierung der verriegelten Position als Schraubverbindungen zwischen Antriebseinheit und Fahrradrahmen ausgebildet sind. Hier können übliche, einfache und preiswerte Normteile zur Fixierung verwendet werden

Ein weiterer Vorteil ergibt sich dadurch, dass mit der erfindungsgemäßen Ausbildung der Verbindung als komplementäres Profil sowohl ein "normaler" Fahrradantrieb, das heißt ein eine Antrieb durch fußbetätigte und mit Pedalen versehene Kurbeln an einem Tretlager vorgesehen werden kann als auch die Verwendung einer motorunterstützten Antriebseinheit, bei der mit Pedalen versehene Kurbeln auf die Antriebswelle eine Mittelmotors wirken. Durch eine Ausbildung, die darin besteht, dass die Antriebseinheit als Pedalantrieb ausgebildet und das an der Antriebseinheit vorgesehene Profil am Lagergehäuse des zugehörigen Tretlagers vorgesehen ist, oder darin, dass die Antriebseinheit als elektromotorisch unterstützter Pedalantrieb ausgebildet und das an der Antriebseinheit vorgesehene Profil am Gehäuse des zugehörigen Elektromotors vorgesehen ist, lässt sich ein beliebiger Austausch von Tretlager und motorunterstützter Antriebseinheit erreichen. So kann beispielsweise der Mittelmotor nur dann eingesetzt/eingebaut werden, wenn der Fahrer Bergtouren unternehmen will. In den übrigen Zeiten begnügt er sich dann mit einem normalen Pedalantrieb, was vorteilhafter Weise das gesamte Fahrzeug erleichtert werden lässt.

Die erfindungsgemäße Ausbildung lässt sich natürlich gleichermaßen für einen Kettenantrieb oder einen Kardanwellenantrieb nutzen, da die Verschieberichtung, in der die komplementär ausgebildeten Profile letztlich verriegelt werden, in jeder Weise und Richtung ausgebildet werden kann.

Insofern wird deutlich, dass das erfindungsgemäße Verbindungssystem besonders vorteilhaft bei einem Fahrrad Verwendung findet, bei dem es zwischen Antriebseinheit und Fahrradrahmen vorgesehen ist.

Anhand eines Ausführungsbeispiels soll die Erfindung näher erläutert werden. Es zeigen
- Fig. 1: ein E-Bike oder Elektrofahrrad mit einem elektrischen Hilfsantrieb,
- Fig. 2: das Elektrofahrrad nach Fig. 1 mit vergrößerter Darstellung des erfindungsgemäßen Verbindungssystems zwischen Antriebseinheit und Fahrradrahmen,
- Fig. 3: eine teilweise geschnittene Ansicht der mit dem Fahrradrahmen verbundenen Antriebseinheit.

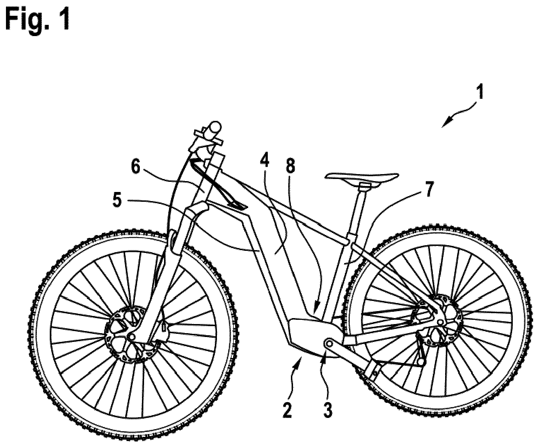

Die Fig. 1 zeigt ein E-Bike oder Elektrofahrrad 1 mit einem elektrischen Hilfsantrieb, der als Mittelmotor 2 ausgebildet und in dem Bereich angeordnet ist, in dem Sattelrohr 7 und das Unterrohr bzw. das vordere Rahmenrohr 5 zusammenlaufen, also im Bereich des Tretlagers 3. Der Elektromotor ist hier so geschaltet, dass er zur Verstärkung der Pedalkraft eingesetzt wird.

Zur Energieversorgung des Elektromotors ist ein lösbar am Fahrrad angeordneter Energiespeicher 4 am oder im vorderen Rahmenrohr 5 vorgesehen. Das vordere Rahmenrohr verbindet das Steuerrohr 6 über die Motorhalterung bzw. den Motoradapter 8 mit dem Tretlager und mit dem Sattelrohr 7.

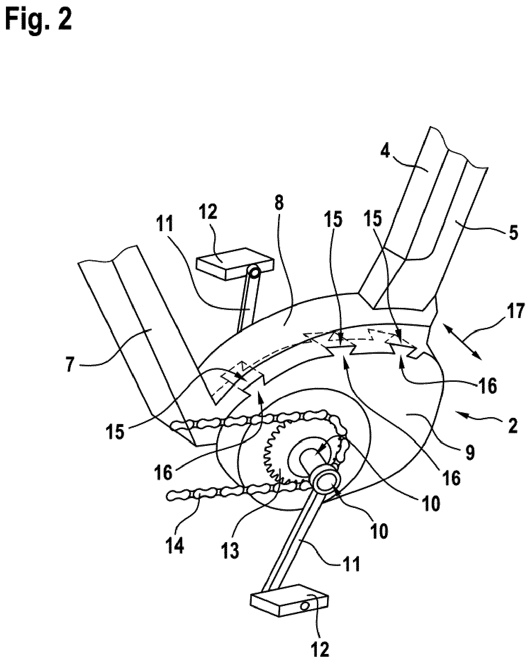

Fig.2 zeigt den Bereich, in dem Sattelrohr 7 und das vordere Rahmenrohr 5 zusammenlaufen, noch einmal detaillierter. Man erkennt hier deutlich, dass das vordere Rahmenrohr 5 über einen zum Rahmen gehörigen Motoradapter 8 mit dem Sattelrohr 7 verbunden ist.

Der Mittelmotor 2 ist in einem Gehäuse 9 untergebracht und weist die Antriebswelle 10 auf, auf der auch die Tretkurbeln 11 angeordnet sind, an deren Enden sich die Pedale 12 befinden. Ebenfalls auf der Antriebswelle 10 befindet sich das Ritzel bzw. Kettenrad 13, in welches die Kette 14 zum Antrieb des hier nicht näher dargestellten hinteren Laufrades eingreift. Der Mittelmotor und die Pedale sind also mit dem Laufrad so verbunden ist, dass das Drehmoment der Antriebswelle auf das Laufrad des Fahrrades übertragen wird. Die Antriebseinheit umfasst hier also dem Mittelmotor 2, dessen Gehäuse 9, die Antriebswelle 10, die Tretkurbeln 11, die Pedale 12 sowie alle zugehörigen Lagerungen, Schaltungen, Zuleitungen etc.

Die gesamte Antriebseinheit ist so aufgebaut, dass sie gegen eine andere Antriebseinheit ausgetauscht werden kann, beispielsweise gegen eine Antriebseinheit mit einer anderen Motorleistung oder eine Antriebseinheit ohne Motor mit lediglich einem Tretlager.

Zur drehfesten Verbindung der Antriebseinheit mit dem Fahrradrahmen weisen der Fahrradrahmen an seinem Motoradapter 8 und die Antriebseinheit am Gehäuse 9 komplementär zueinander ausgebildete, ineinandergreifende Schwalbenschwanzprofile 15, 16 auf, wobei hier vorzugsweise der Rahmen bzw. der Motoradapter 8 die jeweilige Schwalbenschwanznut aufweist.

Die Schwalbenschwanzprofile 15, 16 sind durch eine relativ zueinander erfolgende Verschiebung 17 quer zu Rahmen und Motor und damit parallel zur Antriebswelle 10 lagefest miteinander verriegelbar.

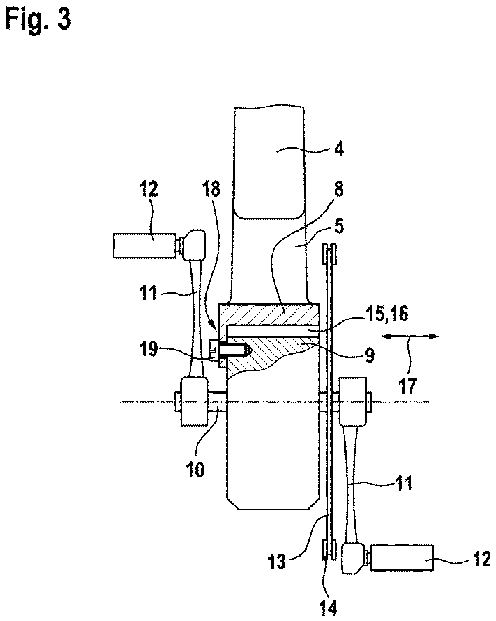

Fig. 3 zeigt noch einmal eine teilweise geschnittene Ansicht der mit dem Fahrradrahmen verbundenen Antriebseinheit, gesehen vom Sattelrohr 7. Antriebseinheit und Fahrradrahmen weisen zusammenwirkend eine die Verschiebung in einer vorgesehenen Endstellung begrenzende Einrichtung auf, nämlich einen am Motoradapter 8 ausgebildeten Anschlag 18 für das Gehäuse 9.

Ein mit Antriebseinheit und Fahrradrahmen zusammenwirkendes Verbindungsmittel, nämlich eine einfache, in den Rahmen 9 eingreifende Schraube 19 dient zur Fixierung der verriegelten Position von Antriebseinheit von Fahrradrahmen in der Endstellung.

### Bezugszeichenliste

### (Teil der Beschreibung)

- 1: Elektrofahrrad
- 2: Elektromotor, Mittelmotor
- 3: Tretlager
- 4: Energiespeicher
- 5: Unterrohr, vorderes Rahmenrohr
- 6: Steuerrohr
- 7: Sattelrohr
- 8: Motoradapter am Rahmen
- 9: Motorgehäuse
- 10: Antriebswelle
- 11: Tretkurbel
- 12: Pedale
- 13: Kettenrad
- 14: Kette
- 15: Schwalbenschwanzprofil, Nut
- 16: Schwalbenschwanzprofil, Feder
- 17: Verschiebung, Verschieberichtung
- 18: Anschlag
- 19: Schraube, Schraubverbindung

## Patentansprüche

1. Verbindungssystem, ausgebildet zur drehfesten Verbindung einer Antriebseinheit eines Fahrrads mit einem Fahrradrahmen, wobei die Antriebseinheit eine Antriebswelle (10) aufweist und die Antriebswelle zum Antrieb eines Laufrades mit letzterem so verbunden ist, dass das Drehmoment der Antriebswelle (10) auf das Laufrad des Fahrrades übertragen wird, wobei der Fahrradrahmen und die Antriebseinheit komplementär zueinander ausgebildete, ineinander greifende Profile (15, 16) aufweisen, **dadurch gekennzeichnet, dass** die Profile (15, 16) durch eine relativ zueinander erfolgende Verschiebung (17) lagefest miteinander verriegelbar sind, wobei Antriebseinheit oder Fahrradrahmen mindestens eine die Verschiebung (17) in einer vorgesehenen Endstellung begrenzende Einrichtung (18) aufweisen und wobei ein mit Antriebseinheit und Fahrradrahmen zusammenwirkendes Verbindungsmittel (19) zur Fixierung der verriegelten Position von Antriebseinheit von Fahrradrahmen in der Endstellung vorgesehen ist.

2. Verbindungssystem nach Anspruch 1, bei dem die Profile als
Schwalbenschwanzprofile (15, 16) ausgebildet sind, wobei vorzugsweise der Rahmen die Schwalbenschwanznut (15) aufweist.

3. Verbindungssystem nach Anspruch 1 oder 2, bei dem die Profile durch eine im Wesentlichen parallel zur Antriebswelle (10) erfolgende Verschiebung (17) miteinander verriegelbar sind.

4. Verbindungssystem nach Anspruch 1 oder 2, bei dem die Antriebswelle (10) zum Antrieb des Laufrades mit letzterem über ein Zugmittel und entsprechende Räder verbunden ist, vorzugsweise über eine Kette (14) und Kettenräder (13) oder über einen Zugriemen und Riemenscheiben, wobei das Zugmittel durch die relativ zueinander erfolgende Verschiebung der Profile spannbar ist.

5. Verbindungssystem nach einem der Ansprüche 1 bis 4, bei dem die die Verschiebung (17) in einer vorgesehenen Endstellung begrenzende Einrichtung als mit einer Anschlagfläche an Antriebseinheit oder Fahrradrahmen zusammenwirkender Anschlag (18) am jeweils anderen Teil ausgebildet ist.

6. Verbindungssystem nach einem der Ansprüche 1 bis 4, bei dem die die Verschiebung in einer vorgesehenen Endstellung begrenzende Einrichtung durch eine selbstklemmende keilförmige Gestaltung der komplementären Profile ausgebildet ist.

7. Verbindungssystem nach einem der Ansprüche 1 bis 6, bei dem die Verbindungsmittel zur Fixierung der verriegelten Position als Schraubverbindungen (19) zwischen Antriebseinheit und Fahrradrahmen ausgebildet sind.

8. Verbindungssystem nach einem der Ansprüche 1 bis 7, wobei die Antriebseinheit als Pedalantrieb ausgebildet und das an der Antriebseinheit vorgesehene Profil am Lagergehäuse des zugehörigen Tretlagers vorgesehen ist.

9. Verbindungssystem nach einem der Ansprüche 1 bis 7, wobei die Antriebseinheit als elektromotorisch unterstützter und mit einem Elektromotor versehener Pedalantrieb ausgebildet und das an der Antriebseinheit vorgesehene Profil (16) am Gehäuse (9) des zugehörigen Elektromotors (2) vorgesehen ist.

10. Fahrrad mit einem nach Anspruch 1 bis 9 ausgebildetem Verbindungssystem zwischen Antriebseinheit und Fahrradrahmen.
